# FASCICULE DE BREVET EUROPEEN

(11) **EP 1 340 633 B1**
(45) Date de publication et mention de la délivrance du brevet: **20.04.2005**
(21) Numéro de dépôt: 03004055.4
(22) Date de dépôt: 25.02.2003
(51) Int. Cl.: B60H 1/00

(54) **Tableau de commande à boutons coaxiaux pour installation de traitement d'air de véhicule.**
Betätigungseinrichtung mit koaxialen Knöpfen für Fahrzeugs- Heizungs- oder Klimaanlage
Instrument panel having coaxial knobs for vehicle heating or air conditioning unit

(30) Priorité: 01.03.2002 FR 0202655
(43) Date de publication de la demande: 03.09.2003
(73) Titulaire: VALEO SYSTEMES THERMIQUES, 78320 Le Mesnil Saint-Denis (FR)
(72) Inventeur: Lacroix, Louis, 94500 Champigny (FR); Toussaint, Alain, 78310 Coignieres (FR)

(56) Documents cités:
- EP-B- 1 021 309
- FR-A- 2 756 067
- US-A- 5 093 764

## Description

L'invention concerne un tableau de commande, notamment pour la commande d'une installation de traitement d'air de véhicule, comprenant une façade sur laquelle font saillie un bouton de commande intérieur et un bouton de commande extérieur propres à tourner autour d'un axe commun traversant la façade de manière à entraîner des organes à commander respectifs, les boutons de commande intérieur et extérieur présentant des zones de manoeuvre respectives et la zone de manoeuvre du bouton de commande extérieur étant à une distance dudit axe commun plus grande et/ou à une distance de la façade plus petite que la zone de manoeuvre du bouton de commande intérieur.

On entend par installation de traitement d'air de véhicule toute installation destinée à conférer des caractéristiques souhaitées à l'atmosphère de l'habitacle d'un véhicule. Cette expression englobe en particulier les installations de chauffage et/ou ventilation, ou de climatisation, des véhicules.

Un tel tableau de commande est décrit dans FR 2 782 299 A.

Les deux boutons de commande coaxiaux occupent sur la façade du tableau de commande une surface moins grande que deux boutons rotatifs juxtaposés, et permettent donc une diminution de l'encombrement en surface de la façade.

Le but de l'invention est de réaliser un gain de place supplémentaire, dans le cas où plus de deux boutons rotatifs sont prévus.

Il est également connu de disposer de contacteurs rotatifs comportant trois organes de commandes coaxiaux déplaçant des contacts électriques sur des pistes concentriques. Un tel dispositif est notamment connu de EP-A-0 644 566.

Un tel agencement nécessite l'emploi d'organes électroniques de commande. Ces éléments sont chers et requièrent une mise au point particulière.

De plus, ces dispositifs ne permettent pas la transmission mécanique de commande entre l'organe commandé et l'organe commandant.

L'invention vise notamment un tableau de commande du genre défini en introduction, et prévoit qu'il comprend en outre au moins un bouton de commande intermédiaire propre à tourner autour dudit axe commun et présentant une zone de manoeuvre située radialement et/ou axialement entre celles des boutons de commande intérieur et extérieur.

Des caractéristiques optionnelles de l'invention, complémentaires ou de substitution, sont énoncées ci-après:
- Lesdits boutons de commande font partie d'équipages tournants respectifs guidés en rotation autour dudit axe par des éléments fixes du tableau de commande, chacun des équipages associés aux boutons de commande extérieur et intermédiaire(s) présentant un passage pour la traversée axiale du ou des équipages associés aux boutons de commande plus intérieurs.
- L'organe à commander par le bouton de commande intérieur est couplé à celui-ci de manière à tourner avec lui autour de l'axe commun.
- L'organe à commander par le bouton de commande intérieur est un commutateur électrique, ou autre commande mécanique.
- Ledit arbre rotatif est couplé au bouton de commande correspondant par la coopération d'une couronne dentée extérieurement solidaire du bouton et d'un pignon solidaire de l'arbre.
- Ledit arbre rotatif porte une vis sans fin qui engrène avec une pièce dentée de manière à entraîner celle-ci en rotation autour d'un axe perpendiculaire à l'axe commun.
- Au moins deux arbres rotatifs couplés à des boutons de commande respectifs portent chacun une vis sans fin qui engrène avec une pièce dentée, les pièces dentées étant ainsi entraînées en rotation autour d'axes respectifs parallèles entre eux.
- Le ou les axes de rotation des pièces dentées sont perpendiculaires à une paroi de support sensiblement plane appartenant à un boîtier du tableau de commande.
- À la ou à chaque pièce dentée est fixée une extrémité d'un câble de transmission de mouvement.

Les caractéristiques et avantages de l'invention seront exposés plus en détail dans la description ci-après, en se référant aux dessins annexés.

La figure 1 est une vue en perspective éclatée d'un tableau de commande selon l'invention.

La figure 2 est une vue partielle en perspective, partiellement arrachée, du tableau de commande.

La figure 3 est une vue partielle en coupe selon le plan horizontal passant par l'axe commun.

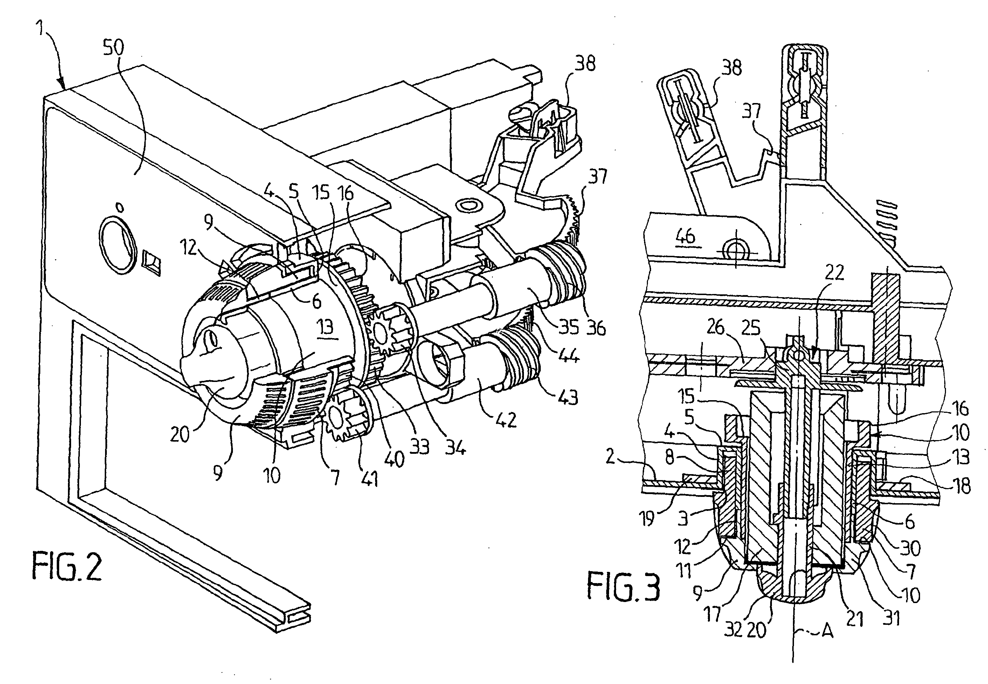

Le tableau de commande illustré comprend un boîtier formé de plusieurs éléments assemblés entre eux et destiné à être fixé sur la planche de bord d'un véhicule automobile. L'un des éléments du boîtier est une façade 1 constituée par une pièce moulée en matière plastique destinée à être intégrée à la planche de bord et définissant une paroi plane 2 qui présente une face extérieure ou avant tournée vers l'habitacle du véhicule. La paroi 2 présente en son centre une ouverture circulaire 3 pour recevoir des équipages rotatifs coaxiaux dont font partie des boutons de commande. Comme on le voit sur les figures 2 et 3, à la périphérie de l'ouverture 3, la façade 1 forme un canal annulaire composé d'une jupe cylindrique radialement extérieure 4 qui se raccorde à la paroi 2 au bord de l'ouverture 3 et s'étend parallèlement à l'axe A vers l'intérieur du boîtier, d'un fond plan 5 s'étendant radialement vers l'intérieur du boîtier à partir de la jupe 4, et d'une jupe cylindrique radialement intérieure 6 s'étendant vers l'extérieur du boîtier à partir du fond 5, parallèlement à l'axe A et au-delà du plan de la paroi 2. Le canal 4-6 sert au guidage d'une pièce rotative annulaire qui définit un bouton de commande 7 disposé en saillie vers l'extérieur du boîtier par rapport à la paroi 2, et une bague de guidage 8 logée dans le canal.

Un autre bouton rotatif annulaire 9 est solidaire d'un tube 10 avec lequel il forme un équipage rotatif. Le bouton 9 présente un diamètre extérieur plus petit que le diamètre extérieur du bouton 7 et plus grand que le diamètre intérieur de celui-ci, et un diamètre intérieur plus petit que le diamètre intérieur du bouton 7. À partir de sa face arrière 10, qui recouvre la face avant 11 du bouton 7, une jupe annulaire 12 s'étend axialement le long de la face radialement interne du bouton 7 et fait face à l'extrémité libre de la jupe 6. Le tube 10 présente une première partie cylindrique 13 qui traverse la façade 1 par le passage axial 14 délimité par la jupe 6, en étant guidé le long de la face interne de celle-ci, et est solidarisé à la lèvre 12. La partie 13 est reliée par un épaulement radial 15 à une partie cylindrique 16 de plus grand diamètre située à l'intérieur du boîtier, en regard du fond 5 du canal.

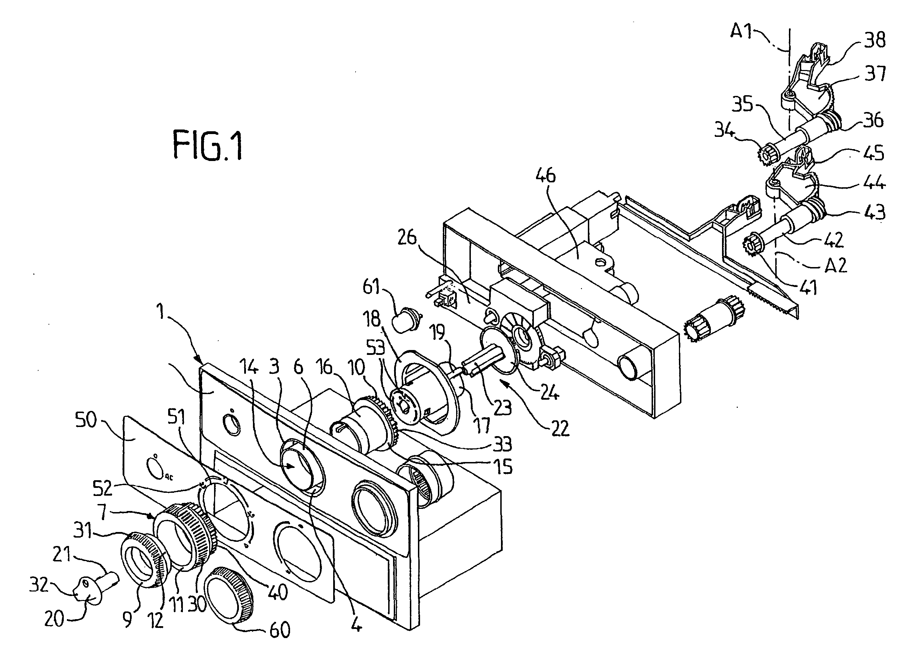

La partie 13 du tube 10 définit à son tour un passage axial qui est traversé par un manchon 17. Comme on le voit sur la figure 1, le manchon 17 est solidarisé à une bague plate 18 par un bras de liaison 19. La bague 18 est elle-même appliquée sur la face interne de la paroi 2, et entoure la jupe 4 qui assure son centrage. Le bras 19 contourne la partie arrière 16 du tube 10 pour se raccorder à l'extrémité arrière du manchon 17 de manière à centrer celui-ci par rapport à l'axe A. Le manchon 17 sert au guidage d'un équipage rotatif comprenant un troisième bouton de commande 20 qui est disposé en regard de la face d'extrémité avant du manchon. À cet effet, le bouton 20 est formé d'une seule pièce avec un tube de guidage 21 qui pénètre dans l'alésage axial du manchon, où il est solidarisé à une autre pièce 22, laquelle comprend une partie tubulaire 23 qui prolonge le tube 21 jusqu'à l'extrémité arrière du manchon et se raccorde à un disque 24 s'étendant en regard de l'extrémité arrière du manchon. En arrière du disque 24, la pièce 22 forme une partie cylindrique 25 qui est guidée dans un alésage d'une paroi intérieure 26 du boîtier, s'étendant parallèlement à la paroi 2 de la façade.

Le tableau de commande décrit comprend donc trois boutons de commande propres à tourner autour du même axe A, à savoir un bouton extérieur 7, un bouton intermédiaire 9 et un bouton intérieur 20. Ces boutons présentent des zones de manoeuvre respectives 30, 31 et 32 destinées à être actionnées par les doigts d'un utilisateur. Les zones 30 et 31 sont striées et légèrement inclinées par rapport à l'axe, la zone 30 étant à une distance de la paroi 2 plus petite et à une distance de l'axe A plus grande que la zone 31. La zone 32 est définie par une barrette diamétrale située à l'extrémité avant du bouton 20. Bien entendu, le bouton intérieur peut aussi présenter une zone de manoeuvre annulaire analogue à celles des autre boutons, lesquelles peuvent également être lisses, ou recouvertes de caoutchouc, par exemple par surmoulage.

Le disque 24 porte sur sa face arrière des contacts électriques qui coopèrent avec d'autres contacts électriques portés par la paroi 26 pour modifier, en fonction de la position angulaire du bouton 20, le circuit d'alimentation d'un groupe moto-ventilateur de l'installation de climatisation du véhicule, et commander ainsi la mise en marche, l'arrêt et le réglage de la vitesse du ventilateur. La partie arrière 16 du tube 10 porte une denture extérieure 33 qui coopère avec un pignon 34 formé à l'extrémité avant d'un arbre 35 monté dans le boîtier de manière à tourner autour d'un axe parallèle à l'axe A. L'extrémité arrière de l'arbre 35 porte une vis sans fin 36 qui coopère avec un secteur denté 37 monté dans le boîtier de façon à tourner autour d'un axe A1 perpendiculaire à l'axe A. Le secteur denté 37 est formé d'une seule pièce avec un bras 38, orienté radialement par rapport à l'axe A1, sur lequel est fixée une extrémité d'un câble de transmission de mouvement non représenté.

La bague 8 formée d'une seule pièce avec le bouton 7 présente elle aussi une denture extérieure 40 qui coopère, à travers une découpe ménagée dans la jupe 4, avec un pignon 41 appartenant à un arbre 42 semblable à l'arbre 35, cet arbre étant monté de manière à tourner autour d'un axe parallèle à l'axe A. La vis sans fin 43 de l'arbre 42 coopère avec un secteur denté 44 monté de manière à tourner autour d'un axe A2 parallèle à l'axe A1. Le secteur 44 est formé d'une seule pièce avec un levier radial 45 auquel est fixée une extrémité d'un câble de transmission de mouvement.

Les boutons 7 et 9, par l'intermédiaire des mécanismes décrits, servent à déplacer des volets tels qu'un volet d'entrée d'air et un volet de mixage, de manière à modifier le circuit de traitement d'air de l'installation de climatisation.

La figure 1 montre une feuille sérigraphiée 50 appliquée sur la face extérieure de la paroi 2 de la façade 1 et présentant une ouverture 51 pour le passage des équipages rotatifs et du manchon 17. La feuille 50 présente, autour de l'ouverture 51, des symboles 52 devant lesquels défile, de manière classique, un repère prévu sur le bouton 7 de manière à indiquer à quel état de l'installation correspond chaque position angulaire du bouton. De même, l'extrémité extérieure du manchon 17 porte des symboles 53 devant lesquels défilent des repères prévus sur les boutons 9 et 20.

On voit sur la figure 1 que le tableau de commande illustré comprend, à droite des boutons coaxiaux décrits, un autre bouton rotatif 60, et à gauche de ceux-ci un bouton poussoir 61. Ces autres boutons sont destinés à commander d'autres éléments de l'installation de climatisation. Ils sont sans relation avec la présente invention et ne seront pas davantage décrits.

Avantageusement, les secteurs 37 et 44 sont supportés par une ou plusieurs parois sensiblement planes 46 du boîtier. Ces parois sont ici sensiblement horizontales, et les axes A1 et A2 sensiblement verticaux. Les parois de support pourraient aussi être inclinées, les axes restant perpendiculaires à celles-ci.

Bien que le tableau de commande décrit ci-dessus comprenne seulement trois boutons de commande coaxiaux, à savoir un bouton intérieur, un bouton extérieur et un bouton intermédiaire, il est clair que plusieurs boutons intermédiaires peuvent être prévus. Le centrage, le guidage en rotation et l'immobilisation axiale des différents boutons intermédiaires peuvent être assurés au moins en partie par coopération directe des équipages rotatifs dont ils font partie, comme c'est le cas dans l'exemple décrit pour le bouton extérieur et le bouton intermédiaire.

Par ailleurs, dans l'exemple décrit, les zones de manoeuvre du bouton de commande extérieur et du bouton de commande intermédiaire sont à la fois à une distance de l'axe commun plus grande et à une distance de la façade plus petite que les zones de manoeuvre du bouton de commande intermédiaire et du bouton de commande intérieur respectivement. Il est également possible de respecter une seule de ces conditions pour chaque couple de boutons, la zone de manoeuvre du bouton dit extérieur étant par exemple à la même distance de l'axe que celle du bouton intermédiaire, ou à une distance de la façade égale ou même inférieure.

## Revendications

1. Tableau de commande, notamment pour la commande d'une installation de traitement d'air de véhicule, comprenant une façade (1) sur laquelle font saillie un bouton de commande intérieur (20) et un bouton de commande extérieur (7) présentant des zones de manoeuvre respectives et propres à tourner autour d'un axe commun (A) traversant la façade de manière à entraîner des organes à commander respectifs, au moins un bouton de commande intermédiaire (9) propre à tourner autour dudit axe commun
**caractérisé en ce que** l'un au moins des boutons de commande extérieur et intermédiaire(s) est couplé à un arbre rotatif (35, 42) parallèle à l'axe commun.

2. Tableau de commande selon la revendication 1, dans lequel lesdits boutons de commande font partie d'équipages tournants respectifs guidés en rotation autour dudit axe par des éléments fixes (4, 6, 17) du tableau de commande, chacun des équipages associés aux boutons de commande extérieur et intermédiaire(s) présentant un passage pour la traversée axiale du ou des équipages associés aux boutons de commande plus intérieurs.

3. Tableau de commande selon l'une des revendications 1 et 2, dans lequel l'organe (24) à commander par le bouton de commande intérieur (20) est couplé à celui-ci de manière à tourner avec lui autour de l'axe commun.

4. Tableau de commande selon l'une des revendications précédentes, dans lequel l'organe (24) à commander par le bouton de commande intérieur est un commutateur électrique.

5. Tableau de commande selon l'une des revendications précédentes, dans lequel ledit arbre rotatif (35, 42) est couplé au bouton de commande correspondant (9, 7) par la coopération d'une couronne dentée extérieurement (33, 40) solidaire du bouton et d'un pignon (34, 41) solidaire de l'arbre.

6. Tableau de commande selon la revendication 5, dans lequel ledit arbre rotatif (35, 42) porte une vis sans fin (36, 43) qui engrène avec une pièce dentée (37, 44) de manière à entraîner celle-ci en rotation autour d'un axe (A1, A2) perpendiculaire à l'axe commun (A).

7. Tableau de commande selon la revendication 6, dans lequel au moins deux arbres rotatifs couplés à des boutons de commande respectifs portent chacun une vis sans fin qui engrène avec une pièce dentée, les pièces dentées étant ainsi entraînées en rotation autour d'axes respectifs (A1, A2) parallèles entre eux.

8. Tableau de commande selon l'une des revendications 6 et 7, dans lequel le ou les axes de rotation des pièces dentées sont perpendiculaires à une paroi de support sensiblement plane (46) appartenant à un boîtier du tableau de commande.

9. Tableau de commande selon l'une des revendications 6 à 8, dans lequel à la ou à chaque pièce dentée (37, 44) est fixée une extrémité d'un câble de transmission de mouvement.

## Patentansprüche

1. Bedientafel, insbesondere zur Bedienung einer Kraftfahrzeug-Luftaufbereitungsanlage mit einer Front (1), auf der ein innerer Bedienknopf (20) und ein äußerer Bedienknopf (7) hervorstehen, die jeweils Betätigungsbereiche aufweisen und sich zum Antrieb der jeweils zu bedienenden Organe um eine gemeinsame, durch die Front hindurch geführte Achse (1) drehen, und mindestens einem, um die gemeinsame Achse drehbaren mittleren Bedienknopf (9),
**dadurch gekennzeichnet, dass** von dem äußeren Bedienknopf und dem bzw. den mittleren Bedienknöpfen wenigstens einer mit einer parallel zur gemeinsamen Achse angeordneten Drehwelle (35, 42) gekoppelt ist.

2. Bedientafel nach Anspruch 1, bei der die Bedienknöpfe jeweils Bestandteil von in feststehenden Elementen (4, 6, 17) der Bedientafel um die besagte Achse drehbar gelagerten Dreheinrichtungen sind, wobei die jeweils dem inneren Bedienknopf und dem mittleren Bedienknopf bzw. den mittleren Bedienknöpfen zugeordneten Dreheinrichtungen einen Durchgang für die axiale Durchführung der den weiter innen angeordneten Bedienungsknöpfen zugeordneten Drehvorrichtung(en) aufweisen.

3. Bedientafel nach einem der Ansprüche 1 und 2, bei der das durch den inneren Bedienknopf (20) zu bedienende Organ (24) mit diesem derart verbunden ist, dass es sich mit ihm um die gemeinsame Achse dreht.

4. Bedientafel nach einem der vorhergehenden Ansprüche, bei der das von dem inneren Bedienknopf zu bedienende Organ (24) ein elektrischer Schalter ist.

5. Bedientafel nach einem der vorhergehenden Ansprüche, bei der die Drehwelle (35, 42) über einen mit dem Knopf fest verbundenen Außenzahnkranz (33, 40) und ein mit der Welle fest verbundenes Ritzel (34, 41) mit dem entsprechenden Bedienknopf (9, 7) gekoppelt ist.

6. Bedientafel nach Anspruch 5, bei der die Drehwelle (35, 42) eine Schnecke (36, 43) trägt, die derart in ein gezahntes Teil (37, 44) eingreift, dass es sich um eine senkrecht zur gemeinsamen Achse verlaufende Achse (A1, A2) dreht.

7. Bedientafel nach Anspruch 6, bei der mindestens zwei der mit den jeweiligen Bedienknöpfen verbundenen Drehwellen jeweils eine Schnecke tragen, die in ein gezahntes Teil eingreift, sodass sich die gezahnten Teile jeweils um zueinander parallel verlaufende Achsen (A1, A2) drehen.

8. Bedientafel nach einem der Ansprüche 6 und 7, bei der die Drehachse(n) der gezahnten Teile senkrecht zu einer vorwiegend ebenen, zu einem Bedientafel-Gehäuse gehörenden Trägerwand (46) verlaufen.

9. Bedientafel nach einem der Ansprüche 6 bis 8, bei der an das oder jedes gezahnte Teil (37, 44) ein Ende eines Bewegungsübertragungskabels befestigt ist.

## Claims

1. Control panel, in particular for control of a vehicle air conditioning installation, including a fascia (1) from which projects an inner control knob (20) and an outer control knob (7) that both present manipulation surfaces and are able to rotate about a common axis (A) and that traverse said fascia in such a manner as to drive respective systems, and at least one intermediate control knob (9) able to rotate about said common axis,
wherein at least one of said outer and intermediate control knobs is coupled to a rotary shaft (35, 42) parallel to said common axis.

2. Control panel according to claim 1, wherein said control knobs form part of respective rotary elements guided rotationally about said axis by fixed parts (4, 6, 17) of said control panel, each of the elements associated with the outer knob and the intermediate control knob(s) presenting an opening to allow the axial passage of the element(s) associated with the innermost control knobs.

3. Control panel according to one of claims 1 and 2, wherein the system (24) controlled by said inner control knob (20) is coupled to this knob such that it rotates with it about said common axis.

4. Control panel according to one of the preceding claims, wherein said system (24) controlled by said inner control knob is an electrical switch.

5. Control panel according to one of the preceding claims, wherein said rotary spindle (35, 42) is coupled to the corresponding control knob (9, 7) via a crown gear around its periphery (33, 40) and attached to the knob, and a pinion (34, 41) attached to the shaft.

6. Control panel according to claim 5, wherein said rotary spindle (35, 42) carries a worm (36, 43) that engages a toothed part (37, 44) causing this part to rotate about an axis (A1, A2) perpendicular to said common axis (A).

7. Control panel according to claim 6, wherein at least two rotary spindles coupled to respective control knobs each carry a worm that engages a toothed part causing these toothed parts to be driven rotationally about respective axes (A1, A2) parallel to each other.

8. Control panel according to one of claims 6 and 7, wherein said axis(es) of rotation of said toothed parts are perpendicular to a substantially flat support panel (46) forming part of the control panel casing.

9. Control panel according to one of claims 6 to 8, wherein one end of a movement transmission cable is attached to each of said toothed parts (37, 44).
